# EUROPÄISCHE PATENTSCHRIFT

(11) **EP 1 974 071 B1**
(45) Veröffentlichungstag und Bekanntmachung des Hinweises auf die Patenterteilung: **26.12.2012**
(21) Anmeldenummer: 07703763.8
(22) Anmeldetag: 10.01.2007
(51) Int. Cl.: C23C 4/10, C23C 4/08, C23C 28/00, C23C 30/00, F01D 5/14, F01D 5/00, F01D 5/28, B64C 3/14

(54) **IM STRÖMUNGSKANAL EINER STRÖMUNGSMASCHINE ANZUORDNENDES BAUTEIL UND SPRITZVERFAHREN ZUM ERZEUGEN EINER BESCHICHTUNG**
COMPONENT FOR ARRANGEMENT IN THE DUCT OF A TURBINE ENGINE AND SPRAY METHOD FOR PRODUCTION OF A COATING
ÉLÉMENT À DISPOSER DANS UN CANAL D'ÉCOULEMENT D'UNE TURBOMACHINE ET PROCÉDÉ DE PULVÉRISATION POUR RÉALISER UN REVÊTEMENT

(30) Priorität: 17.01.2006 EP 06000953
(43) Veröffentlichungstag der Anmeldung: 01.10.2008
(73) Patentinhaber: SIEMENS AKTIENGESELLSCHAFT, 80333 München (DE)
(72) Erfinder: JABADO, Rene, 14199 Berlin (DE); JENSEN, Jens Dahl, 14050 Berlin (DE); KRÜGER, Ursus, 14089 Berlin (DE); KÖRTVELYESSY, Daniel, 13469 Berlin (DE); REICHE, Ralph, 13465 Berlin (DE); RINDLER, Michael, 15566 Schöneiche (DE)
(86) Internationale Anmeldenummer: PCT/EP2007/050216
(87) Internationale Veröffentlichungsnummer: WO 2007/082823

(56) Entgegenhaltungen:
- EP-A- 0 702 130
- EP-A- 1 506 816
- CH-A- 351 301
- DE-A1- 3 609 541
- DE-A1- 3 835 213
- DE-A1- 10 000 780
- DE-A1- 10 126 100
- US-A- 4 650 138
- US-A- 4 706 910
- US-A- 5 860 626
- US-B1- 6 345 791

## Beschreibung

Die vorliegende Erfindung betrifft ein Spritzverfahren zum Erzeugen einer Beschichtung mit einer dreidimensionalen Oberflächenstruktur.

Strömungsmaschinen wie etwa Gasturbinenanlagen stellen Anlagen mit sehr hoch entwickelten Wirkungsgraden da. Dennoch ist man bestrebt, die Wirkungsgrade dieser Maschinen weiter zu erhöhen. Bereits eine Steigerung des Wirkungsgrades von Bruchteilen eines Prozentes führt heutzutage bei Gasturbinenanlagen zu einem Wettbewerbsvorteil. Auf den Wirkungsgrad Einfluss nehmende Parameter sind beispielsweise die Verbrennungstemperatur in der Strömungsmaschine, der Grad der Verbrennung des Brennstoffes oder die Strömungseigenschaften der im Strömungskanal befindlichen Bauteile.

EP 0 702 130 A2 beschreibt eine Schaufelspitze mit schneidfähigem Anstreifbelag. Dieser wird durch thermisches Spritzen eines keramischen Materials durch eine Lochmaske auf die zu beschichtende Bauteiloberfläche unter einem Spritzwinkel von 0° bis 50° zur Ausbildung von Schneidkanten und Freiräumen hergestellt.

DE 100 00 780 A1 beschreibt Bekleidungsstücke mit Haihaut-Oberflächenprofil.

US 5,860,626 beschreibt die Oberfläche eines von einem Fluid umströmenden Gegenstandes mit einer schuppenartigen Oberfläche.

EP 1 506 816 A1 und DE 101 26 100 A1 beschreiben Lavaldüsen für das Kaltgasspritzen.

CH 351301 beschreibt ein Verfahren zum Erzeugen von dünnen Belägen, die sich durch Löcher in einem Körper hindurchstrecken. Die dünnen Beläge werden mittels eines Dampfabscheidungsverfahrens und einer bewegten Maske erzeugt.

DE 3835213 A1 beschreibt eine Tragflügelausbildung mit einem Grundriss, der nur aus parabelförmigen oder mindestens gebogenen Begrenzungslinien, Vorderkanten und Hinterkanten gebildet ist.

DE 3609541 A1 beschreibt eine Oberfläche eines turbulent umströmten Körpers, der einen verminderten Strömungswiderstand aufgrund herabgesetzter Wandschubspannung aufweist. Der Körper besitzt in Strömungsrichtung verlaufende Rillen, die durch scharfkantig ausgebildete Rippen voneinander getrennt sind.

US 4,706,910 beschreibt ein System von Flusssteuereinrichtungen, die zu einer reduzierten Oberflächenreibung auf aerodynamischen und hydrodynamischen Oberflächen führen.

US 4,650,138 beschreibt eine aerodynamische Oberfläche mit reduziertem Luftwiderstand. Die Oberfläche weist eine Vielzahl voneinander beabstandeter mikroskopischer Gräben auf.

US 6,345,791 B1 beschreibt eine aerodynamische Oberfläche mit reduzierter Reibung. Die Oberfläche ist mit Strukturen versehen, die im Wesentlichen einen dreieckigen Querschnitt aufweisen und sich in Strömungsrichtung erstrecken.

Aufgabe der vorliegenden Erfindung ist es daher, ein Spritzverfahren zum Erzeugen einer Beschichtung auf einem Bauteil zur Verfügung zu stellen, mit dem sich eine Beschichtung Erzeugen lässt, die eine Steigerung des Wirkungsgrades der Anlage ermöglicht.

Diese Aufgabe wird durch ein Spritzverfahren zum Erzeugen einer Beschichtung nach Anspruch 1 oder Anspruch 3 gelöst. Die abhängigen Ansprüche enthalten vorteilhafte Ausgestaltungen der Erfindung.

Mit den erfindungsgemäßen Spritzverfahren lässt sich ein Bauteil herstellen, welches im Strömungskanal einer Strömungsmaschine anzuordnen ist, und das mit einer Beschichtung versehen ist, die eine Oberflächenstruktur mit Schuppen aufweist, welche einander in Strömungsrichtung überlappen. Die überlappenden Schuppen ermöglichen es, die Beschichtung in Art einer Haifischhaut auszugestalten und so den Strömungswiderstand, den die Bauteiloberfläche dem strömenden Medium entgegensetzt, zu vermindern. Durch die Verminderung des Strömungswiderstandes lässt sich der Wirkungsgrad der Anlage steigen.

Das Bauteil kann insbesondere als Turbinenschaufel für den Einsatz in einer Gasturbinenanlage ausgebildet sein. Wenn es als Leit- oder Laufschaufel der Turbine ausgebildet ist, kann der Wirkungsgrad der Gasturbinenanlage auf Grund der günstigeren Strömungseigenschaften erhöht werden. Wenn es als Leit- oder Laufschaufel des Verdichters ausgebildet ist, so vermindern die verbesserten Strömungseigenschaften die Reibung zwischen der zu verdichtenden Luft und den Verdichterschaufeln, was dazu führt, dass die Temperatur der verdichteten Luft am Verdichteraustritt im Vergleich zu Verdichtern mit konventionellen Schaufeln vermindert ist. Auch die verminderte Verdichteraustrittstemperatur führt zu einer Steigerung des Wirkungsgrades der Gasturbinenanlage.

Besonders vorteilhaft ist es, wenn die Schuppen mit Rillen versehen sind, die in Strömungsrichtung verlaufen, wenn das Bauteil in die Strömungsmaschine eingebaut ist. Die Schuppen mit den in Strömungsrichtung verlaufenden Rillen können einer realen Haifischhaut, die besonders günstige Strömungseigenschaften aufweist, sehr nahe kommen, so dass auch die Beschichtung die günstigen Strömungseigenschaften aufweisen kann.

Wenn das Bauteil mit einer die Korrosion des Bauteils hemmenden Beschichtung und/oder einer die Oxidation des Bauteils hemmenden Beschichtung und/oder einer wärmedämmenden Beschichtung versehen wird, kann diese Beschichtung bzw. können diese Beschichtungen in der erwähnten Schuppenform aufgebracht werden. Im Falle von Bauteilen für Gasturbinen können hierbei insbesondere MCrAIX-Beschichtungen als korrosionshemmende und/oder oxidationshemmende Beschichtungen und keramische Beschichtungen als wärmedämmende Beschichtung zum Einsatz kommen.

Beschichtungen mit besonders geringem Strömungswiderstand lassen sich herstellen, wenn der zeitliche Überlapp der Maskenöffnungen in eine Richtung erfolgt, in der ein Fluid an dem zu beschichtenden Bauteil entlangströmen soll, oder die Spritzrichtung entgegen dieser Richtung geneigt ist.

In einer besonders vorteilhaften Ausgestaltung des Spritzverfahrens weist die Maske Schlitze als Maskenöffnungen auf. Auf diese Weise lassen sich Beschichtungen mit Schuppenstrukturen herstellen, in denen die Schuppen Rillen aufweisen. Dabei können die Rillen insbesondere in Richtung des Überlapps verlaufen. Auf diese Weise lassen sich beim späteren beschichteten Bauteil Querströmungen, also Strömungen entlang der Bauteiloberfläche, die quer zur eigentlichen Strömungsrichtung verlaufen, verhindern, was den Strömungswiderstand des Bauteils vermindert.

Zum Herstellen der Beschichtung kann ein thermisches Spritzverfahren, beispielsweise Plasmaspritzen oder insbesondere Kaltgas-Spritzen zu Anwendung kommen.

Weitere Merkmale, Eigenschaften und Vorteile der vorliegenden Erfindung ergeben sich aus der nachfolgende Beschreibung eines Ausführungsbeispiels unter Bezugnahme auf die beiliegenden Figuren.
- Fig. 1: zeigt beispielhaft eine Gasturbine in einem Längsteilschnitt.
- Fig. 2: zeigt in perspektivischer Ansicht eine Laufschaufel oder Leitschaufel eine Strömungsmaschine.
- Fig. 3: zeigt eine Brennkammer einer Gasturbinenanlage.
- Fig. 4: zeigt in einer stark schematisierten Schnittansicht ein Bauteil mit einer Beschichtung, die eine schuppenartige Oberflächenstruktur aufweist.
- Fig. 5: zeigt den in Figur 4 dargestellten Ausschnitt in Draufsicht.
- Fig. 6: zeigt einen ersten Schritt eines Spritzverfahrens zum Herstellen der in den Figuren 4 und 5 gezeigten Beschichtung.
- Fig. 7: zeigt einen zweiten Schritt des Herstellens der in den Figuren 4 und 5 gezeigten Beschichtung.
- Fig. 8: zeigt die Maske, die in dem mit Bezug auf die Figuren 6 und 7 gezeigten Verfahren Verwendung findet.
- Fig. 9: zeigt eine alternative Maske zum Herstellen der Beschichtung.
- Fig. 10: zeigt das Herstellen der Beschichtung unter Verwendung der in Figur 9 gezeigten Maske.

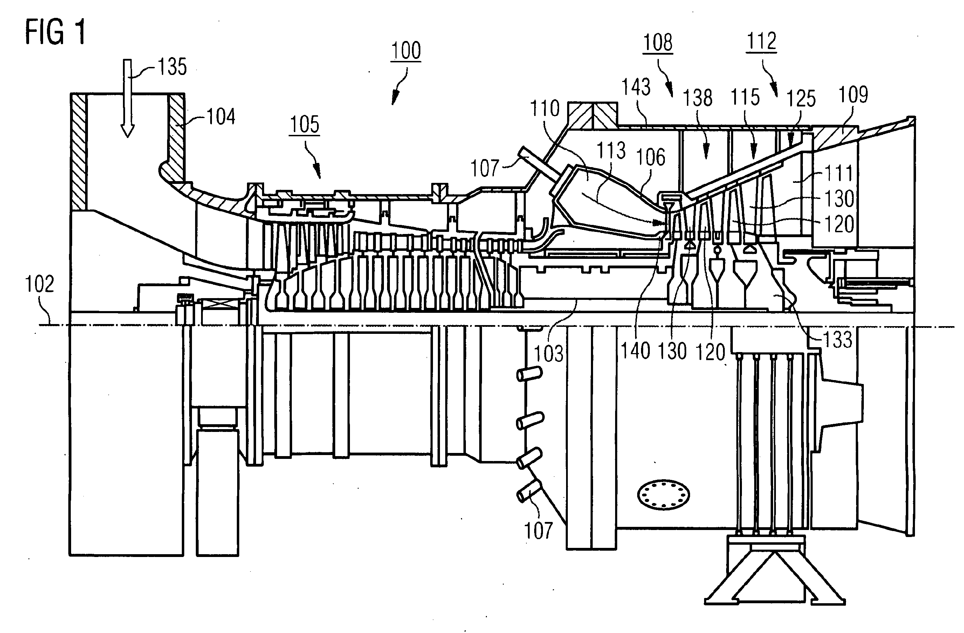

Die Figur 1 zeigt beispielhaft eine Gasturbine 100 in einem Längsteilschnitt. Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe

Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAIX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

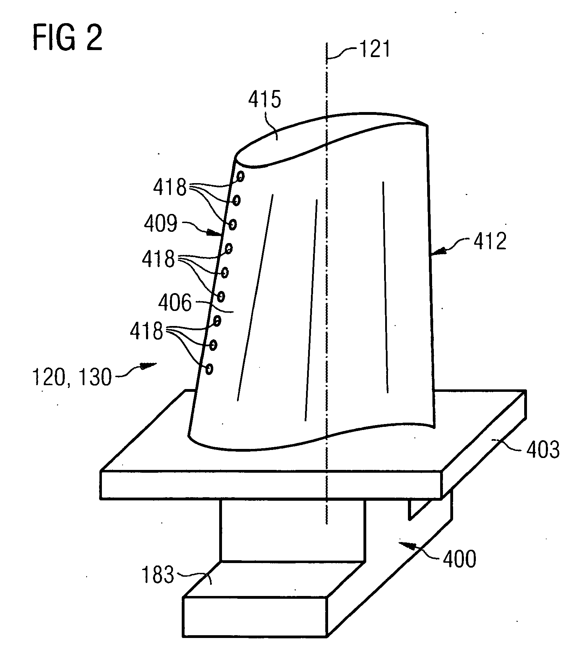

Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt). Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind. Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen. Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAIX kann noch eine Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

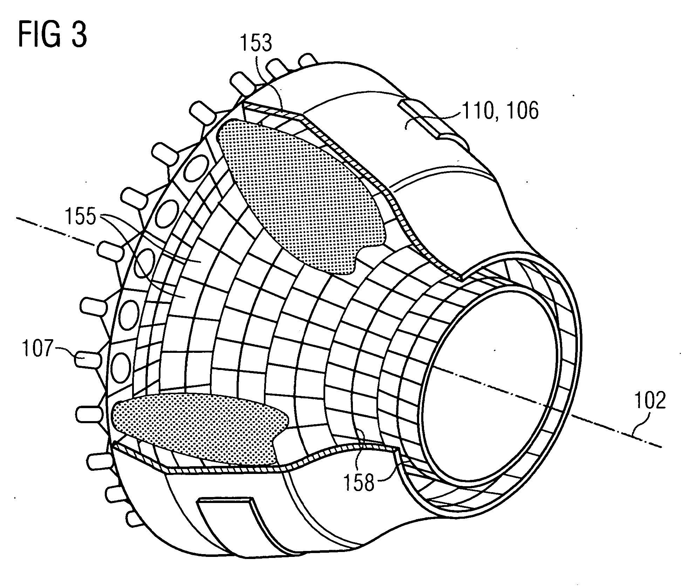

Die Figur 3 zeigt eine Brennkammer 110 einer Gasturbine. Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrAlX und/oder keramischen Beschichtungen sein. Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

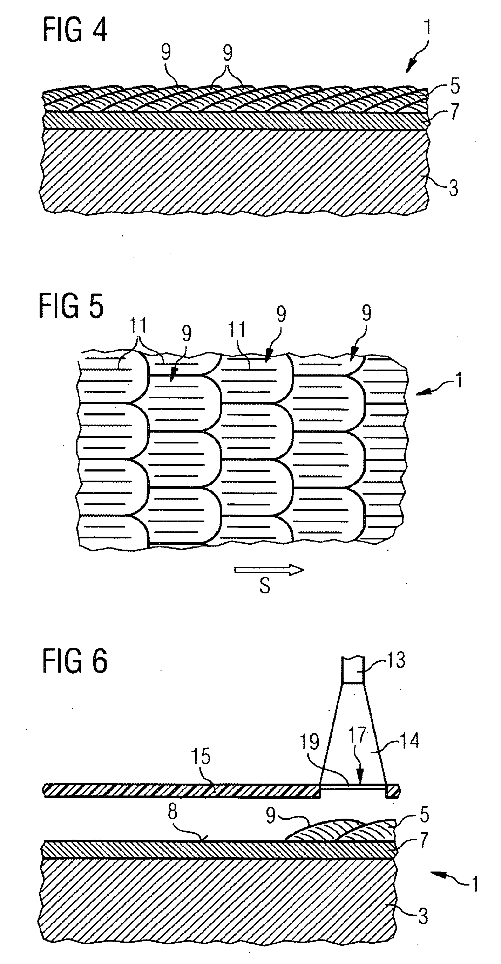

Fig. 4 zeigt einen stark schematisierten Ausschnitt aus einer Gasturbinenschaufel 1. Auf dem Basismaterial 3 der Turbinenschaufel 1 ist eine Beschichtung 5 aufgebracht, die eine schuppenartige Oberflächenstruktur aufweist. Im vorliegenden Ausführungsbeispiel ist die Beschichtung 5 eine keramische Wärmedämmschicht. Unter dieser ist eine MCrAIX-Beschichtung 7 vorhanden, die einerseits als Haftvermittler zwischen dem Basismaterial und der keramischen Beschichtung 5 und andererseits als oxidations- und korrosionshemmende Beschichtung dient.

Die keramische Beschichtung 5 ist aus einer Vielzahl von Schuppen 9 aufgebaut, die einander teilweise überlappen. Die Oberflächen der einzelnen Schuppen 9 weisen zudem Rillen 11 auf. Der Überlapp der Schuppen 9 und die Orientierung der Rillen 11 sind dabei so gewählt, dass der Überlapp in einer Strömungsrichtung S erfolgt, in der die Verbrennungsabgase an der Oberfläche der Turbinenschaufel 1 entlangströmen, wenn diese in einer Gasturbinenanlage eingebaut ist. Die gewählte Orientierung unterbindet dabei das Ausbilden von Querströmungen entlang der Oberfläche der Turbinenschaufel 1, welche den Reibungskoeffizient der Turbinenschaufel 1 erhöhen würden.

Obwohl in Figur 5 die einzelne Schuppenreihen gegeneinander versetzt angeordnet sind, kann in einer Variation dieser Ausgestaltung auch auf das Versetzen der einzelnen Schuppenreihen verzichtet werden.

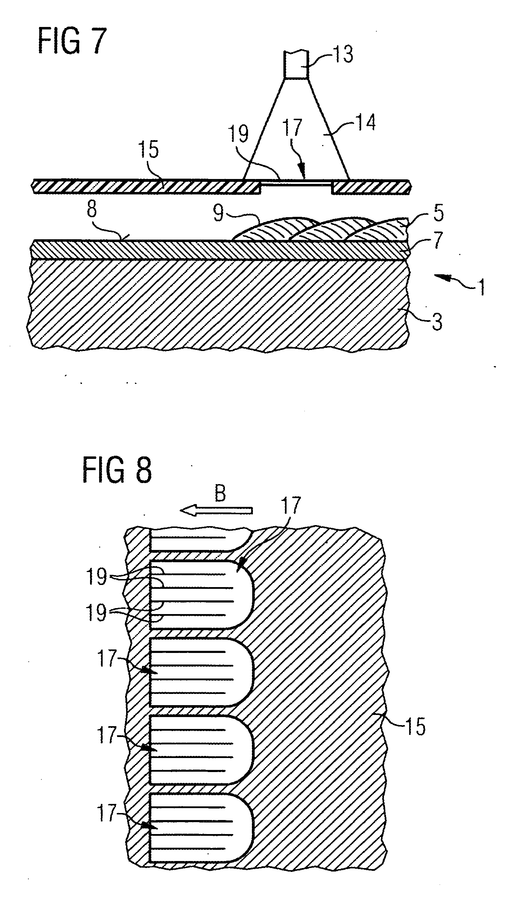

Ein Verfahren zum Herstellen der in den Figuren 4 und 5 dargestellten Beschichtung mit schuppenartiger Oberfläche ist in den Figuren 6 und 7 dargestellt. Das Herstellen der Beschichtung 5 erfolgt mit einem thermischen Spritzverfahren, im vorliegenden Ausführungsbeispiel mit einem so genannten Kaltgas-Spritzverfahren. In einem Kaltgas-Spritzverfahren wird ein Gasstrahl mittels einer Laval-Düse auf Überschallgeschwindigkeit beschleunigt. In den Gasstrahl werden Partikel des Beschichtungsmaterials eingebracht, welche vom Gasstrahl mitgerissen und auf die zu beschichtende Oberfläche geschleudert werden. Auf Grund der hohen Geschwindigkeiten der Partikel schmelzen diese beim Auftreffen auf die Oberfläche zumindest teilweise auf und bilden die Beschichtung, nachdem sie wieder erstarrt sind.

Figur 6 zeigt die zu beschichtende Turbinenschaufel 1, bei der bereits die MCrAIX-Beschichtung 7 auf das Basismaterial 3 aufgebracht ist. Auch die keramische Wärmedämmschicht 5 ist bereits teilweise hergestellt. Mittels der Laval-Düse 13 werden die für das Herstellen der Beschichtung 5 verwendeten Keramikpartikel auf die Oberfläche 8 der MCrAlX-Beschichtung geschleudert, wobei eine Maske 15 dafür sorgt, dass die Keramikpartikel die Oberfläche 8 lediglich in einem beschränkten Gebiet erreichen, nämlich dort, wo neue Schuppen 9 gebildet werden sollen.

Der durch die Maskenöffnung 17 entblößte Teil der Oberfläche 8 überlappt teilweise mit bereits bestehenden Schuppen 9. Das mittels des Kaltgas-Spritzverfahrens aufgebrachte Material lagert sich daher teilweise auf der unbedeckten Oberfläche 8 und teilweise auf bereits bestehenden Schuppen 9 ab. Auf diese Weise entsteht eine neue Schuppe 9. Nachdem die Schuppe 9 hergestellt worden ist, wird die Maske soweit verschoben, dass die Maskenöffnung 17 sich wieder teilweise über einem unbedeckten Oberflächenbereich der MCrAIX-Schicht und teilweise über der zuvor gebildeten Schuppe 9 befindet. Durch Wiederholung dieses Vorganges, solange bis die gesamte Oberfläche 8 der MCrAIX-Beschichtung 7 mit der keramischen Wärmedämmschicht 5 beschichtet ist, kann die in den Figuren 4 und 5 gezeigte schuppenartige Oberflächenstruktur der Wärmedämmschicht 5 hergestellt werden.

Die im soeben beschriebenen Verfahren verwendete Maske 15 ist schematisch in Figur 8 dargestellt. Die Maske 15 weist eine Anzahl von Maskenöffnungen 17 auf, die in einer Richtung nebeneinander angeordnet sind, die Senkrecht zu Bewegungsrichtung B der Maske beim Herstellen der keramischen Wärmedämmschicht 5 verläuft. Jede Maskenöffnung 17 weist eine Anzahl von Maskierungsstreifen 19 auf, die sich im Wesentlichen in Bewegungsrichtung der Maske 15 erstrecken. In den von diesen Maskierungsstreifen 19 abgedeckten Oberflächenbereichen erreicht weniger Beschichtungsmaterial die Oberfläche 8, so dass sich dort die Rillen 11 bilden.

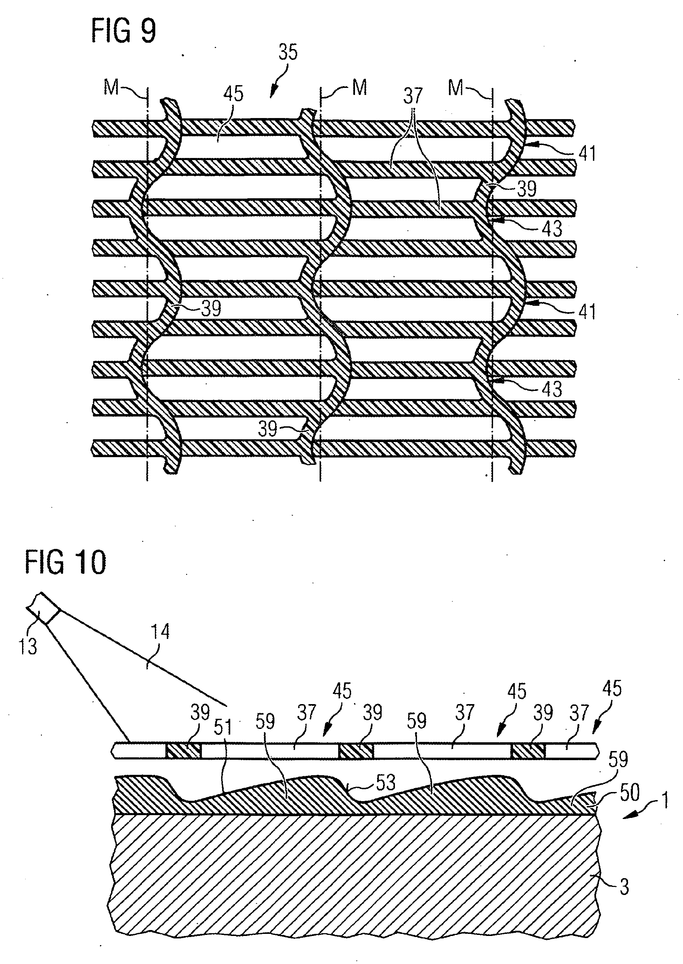

Eine alternative Maske 35, die in einem alternativen Verfahren zum Herstellen einer Beschichtung mit schuppenartiger Oberflächenstruktur Verwendung finden kann, ist in Figur 9 dargestellt. Diese Maske 35 ist im wesentlichen Gitterförmig mit Gitterstreben 35, 39 als Maskierungsabschnitten aufgebaut, wobei sich erste Gitterstreben 37 in eine erste Richtung erstrecken und sich zweite Gitterstreben 39 in eine zweite Richtung erstrecken, die im Wesentlichen senkrecht zur ersten Richtung verläuft. Die zweiten Gitterstreben 39 sind wellenförmig ausgebildet und oszillieren jeweils um eine gedachte Mittellinie M. Einander benachbarte zweite Gitterstreben 39 sind derart versetzt, dass sich die Wellenberge 41 einer zweite Gitterstrebe 39 dort befinden, wo sich bei den benachbarten zweiten Gitterstreben 39 die Wellentäler 34 befinden. Auf diese Weise kann ein Versatz benachbarter Schuppenreihen, wie er in Figur 5 dargestellt ist, erzielt werden. Es sei jedoch angemerkt, dass die Berge 41 und Täler 43 der zweiten Gitterstreben 39 nicht notwendigerweise gegeneinander verschoben zu sein brauchen. In diesem Fall weist auch die resultierende schuppenartige Oberflächenstruktur der Beschichtung keinen Versatz benachbarter Schuppenreihen auf.

Der Einsatz der in Figur 9 dargestellten Maske 35 in einem alternativen Verfahren zum Herstellen einer Beschichtung 50 mit einer schuppenartigen Oberflächestruktur ist in Figur 10 schematisch dargestellt. Im in Figur 10 dargestellten Verfahren kommt dasselbe Kaltgas-Spritzverfahren zur Anwendung, wie es mit Bezug auf die Figuren 6 und 7 beschrieben worden ist. Im Unterschied zu dem zuvor beschriebenen Verfahren ist der Hochgeschwindigkeits-Gasstrahl 14 jedoch nicht Senkrecht auf die Oberfläche gerichtet, sondern schließt einen Winkel mit der Oberflächennormalen ein. Mit anderen Worten, sie ist in eine Richtung geschwenkt, die entgegen der Strömungsrichtung S verläuft.

Auf Grund des schrägen Auftreffens der Beschichtungspartikel bildet sich eine unsymmetrische Struktur der Beschichtung 50 aus, welche zur Ausbildung der schuppenartigen Oberflächenstruktur führt. Die Verschwenkung der Laval-Düse 13 ist dabei so gewählt, dass die Anströmbereiche 51 der Schuppen 59 einen flachen Anstieg 51 aufweisen. Die Abströmbereiche 53 der Schuppen 59 fallen dagegen im Vergleich zu den Anströmbereichen 51 steil ab. Der Verschwenkungswinkel liegt von der Normale aus gesehen im Bereich zwischen 20° und 40°.

Beim Herstellen der Beschichtung 50 ist die Maske 35 so orientiert, dass sich die ersten Gitterstreben 37 im Wesentlichen in der späteren Strömungsrichtung S und die gedachten Mittellinien M der zweiten Gitterstreben 39 senkrecht zur späteren Strömungsrichtung S erstrecken. Die zweiten Gitterstreben 39 dienen dann in erste Linie dazu, die Schuppen 59 herzustellen, wohingegen die ersten Gitterstreben 37 zum Ausbilden der Rillen 11 in den Oberflächen der Schuppen 59 dienen. Die Maske 35 ist dabei vorzugsweise aus einen flexiblen Material hergestellt, so dass sie sich der Geometrie der zu beschichtenden Oberfläche der Turbinenschaufel 1 anpasst.

Die im zweiten Ausführungsbeispiel zum Herstellen der Beschichtung 50 mit schuppenartiger Oberflächenstruktur beschriebene Maske 35 bietet gegenüber der im ersten Ausführungsbeispiel verwendeten Maske 15 den Vorteil, dass die komplette Beschichtung hergestellt werden kann, ohne dass ein Verschieben der Maske notwendig wäre.

Es sei an diese Stelle darauf hingewiesen, dass die in Figur 10 dargestellte Beschichtung 50 direkt auf die Oberfläche das Basismaterials 3 der Turbinenschaufel 1 aufgebracht ist. Dies kann Beispielsweise der Fall sein, wenn die Beschichtung 50 eine korrosions- und/oder oxidationshemmende Beschichtung für ein Leit- oder Laufschaufel des Verdichters darstellt. Es ist jedoch auch möglich, mit dem mit Bezug auf Figur 10 beschriebenen Verfahren eine Wärmedämmbeschichtung herzustellen, die auf eine MCrAIX-Beschichtung oder eine andere Haftvermittlerbeschichtung aufgebracht wird. Ebenso ist es im mit Bezug auf die Figuren 6 und 7 beschriebenen Verfahren möglich, eine Beschichtung direkt auf die Oberfläche des Basismaterials 3 aufzubringen, also ohne die Verwendung einer Haftvermittlerschicht.

## Patentansprüche

1. Spritzverfahren zum Erzeugen einer Beschichtung (5) mit einer dreidimensionalen schuppenartigen Oberflächenstruktur auf einem Bauteil (1), welches im Strömungskanal einer Strömungsmaschine anzuordnen ist, in dem während des Spritzens wenigstens eine Maske (15) mit mindestens einer Maskenöffnung (17) zum Einsatz kommt,
**dadurch gekennzeichnet, dass** die mindestens eine Maske (15) zeitlich nacheinander derart positioniert wird, dass sich Schuppen (9) bilden, wobei in zwei zeitlich aufeinander folgenden Positionen der Maske (15) die Positionen der Maskenöffnung (17) teilweise überlappen, so dass das aufgebrachte Material teilweise auf der unbedeckten Oberfläche (8) ablagert und teilweise auf bereits bestehenden Schuppen (9), wobei der Überlapp der Maskenöffnungen (19) in einer Strömungsrichtung (S) erfolgt, in der später ein Fluid an dem beschichteten Bauteil (1) entlangströmen soll

2. Spritzverfahren nach Anspruch 1, **dadurch gekennzeichnet, dass**
eine keramische Wärmedämmschicht (5) erzeugt wird,
eine Maske (15) mit Maskenöffnungen (17) Verwendung findet, die in einer Richtung, die senkrecht zur Bewegungsrichtung (B) der Maske (15) beim Herstellen der keramischen Wärmedämmschicht (5) verläuft, nebeneinander angeordnet sind, und
jede Maskenöffnung (17) eine Anzahl von Maskierungsstreifen (19) aufweist.

3. Spritzverfahren zum Erzeugen einer Beschichtung (5) mit einer dreidimensionalen schuppenartigen Oberflächenstruktur auf einem Bauteil (1), welches im Strömungskanal einer Strömungsmaschine anzuordnen ist, in dem das Spritzen aus einer Spritzrichtung erfolgt, die gegen die Normale der zu beschichtenden Oberfläche geneigt ist, wobei eine Maske (35) Verwendung findet, die im wesentlichen gitterförmig mit Gitterstreben (35, 39) als Maskierungsabschnitten aufgebaut ist, wobei sich erste Gitterstreben (37) in eine erste Richtung erstrecken und sich zweite Gitterstreben (39) in eine zweite Richtung erstrecken,
**dadurch gekennzeichnet, dass** die zweiten Gitterstreben (39)im Wesentlichen senkrecht zur ersten Richtung verlaufen, wellenförmig ausgebildet sind und jeweils um eine gedachte Mittellinie (M) oszillieren, wobei einander benachbarte zweite Gitterstreben (39) derart versetzt sind, dass sich die Wellenberge (41) einer zweite Gitterstrebe (39) dort befinden, wo sich bei den benachbarten zweiten Gitterstreben (39) die Wellentäler (34) befinden.

4. Spritzverfahren nach Anspruch 1, 2 oder 3,
**dadurch gekennzeichnet, dass** die wenigstens eine Maske (15, 35) Schlitze als Maskenöffnungen (17, 45) aufweist.

5. Spritzverfahren nach einem der Ansprüche 1 bis 4,
**dadurch gekennzeichnet, dass** ein thermischer Spritzprozess zur Anwendung kommt.

6. Spritzverfahren nach Anspruch 5,
**dadurch gekennzeichnet, dass** das thermische Spritzverfahren ein Kaltgas-Spritzverfahren ist.

## Claims

1. Spraying method for producing a coating (5) with a three-dimensional scale-like surface structure on a component (1), which is to be arranged in the flow channel of a turbomachine,
wherein at least one mask (15) with at least one mask opening (17) is employed during the spraying, **characterized in that** the at least one mask (15) is positioned in chronological sequence so that scales (9) are formed, the positions of the mask opening (17) partially overlapping in two chronologically successive positions of the mask (15), so that the applied material is partly deposited on the uncovered surface (8) and partly on already existing scales (9), the overlap of the mask openings (17) taking place in a flow direction (S) in which a fluid is subsequently intended to flow along the coated component (1).

2. Spraying method according to Claim 1, **characterized in that**
a ceramic thermal barrier layer (5) is produced,
use is made of a mask (15) with mask openings (17) which are arranged next to one another in a direction that runs perpendicularly to the movement direction (B) of the mask (15) when the ceramic thermal barrier layer (5) is being produced, and
each mask opening (17) comprises a number of masking strips (19).

3. Spraying method for producing a coating (5) with a three-dimensional scale-like surface structure on a component (1), which is to be arranged in the flow channel of a turbomachine,
wherein the spraying is carried out from a spraying direction which is inclined relative to the normal of the surface to be coated,
use being made of a mask (35) which is constructed essentially in the form of a lattice with lattice bars (35, 39) as masking sections, first lattice bars (37) extending in a first direction and second lattice bars (39) extending in a second direction,
**characterized in that**
the second lattice bars (39) run essentially perpendicularly to the first direction, are designed in an undulating fashion and respectively oscillate about an imaginary midline (M), mutually neighbouring second lattice bars (39) being offset so that the wave crests (41) of a second lattice bar (39) lie where the wave troughs (34) are located on the neighbouring second lattice bars (39).

4. Spraying method according to Claim 1, 2 or 3,
**characterized in that** the at least one mask (15, 35) comprises slots as mask openings (17, 45).

5. Spraying method according to one of Claims 1 to 4,
**characterized in that** a thermal spraying process is employed.

6. Spraying method according to Claim 5,
**characterized in that** the thermal spraying method is a cold gas spraying method.

## Revendications

1. Procédé de pulvérisation pour la production d'un revêtement ( 5 ) ayant une structure de surface tridimensionnelle de type en écailles sur un élément ( 1 ) constitutif, qui doit être monté dans le canal d'écoulement d'une turbomachine, dans lequel, pendant la pulvérisation, on utilise au moins un masque ( 15 ) ayant au moins une ouverture ( 17 ) de masque, **caractérisé en ce que**
on met le au moins un masque ( 15 ), successivement dans le temps, en une position telle qu'il se forme des écailles ( 9 ), les positions de l'ouverture ( 27 ) du masque se chevauchant en partie dans deux positions du masque ( 15 ) se succédant dans le temps, de manière à ce que le matériau déposé se dépose en partie sur la surface ( 8 ) non recouverte et en partie sur des écailles ( 9 ) existant déjà, le chevauchement des ouvertures ( 19 ) du masque s'effectuant dans un sens ( S ) du courant, dans lequel ultérieurement un fluide doit passer sur l'élément ( 1 ) constitutif revêtu.

2. Procédé de pulvérisation suivant la revendication 1,
**caractérisé en ce que**
on produit une couche ( 5 ) calorifuge en céramique,
on utilise un masque ( 15 ) ayant des ouvertures ( 17 ) de masque, qui sont disposées côte à côte dans une direction qui s'étend perpendiculairement à la direction ( B ) de déplacement du masque ( 15 ) lors de la fabrication de la couche ( 5 ) calorifuge en céramique, et
chaque ouverture ( 17 ) de masque a un certain nombre de bandes ( 19 ) de masquage.

3. Procédé de pulvérisation pour la production d'un revêtement ( 5 ) ayant une structure de surface tridimensionnelle de type en écailles sur un élément ( 1 ) constitutif, qui doit être monté dans le canal d'écoulement d'une turbomachine, dans lequel on effectue la pulvérisation dans une direction de pulvérisation, qui est inclinée par rapport à la normale à la surface à revêtir, dans lequel on utilise un masque ( 35 ) qui est constitué essentiellement sous la forme d'une grille ayant des barrettes ( 35, 39 ) de grille servant de tronçons de masquage, des premières barrettes ( 37 ) de grille s'étendant dans une première direction et des deuxièmes barrettes ( 39 ) de grille s'étendant dans une deuxième direction,
**caractérisé en ce que** les deuxièmes barrettes ( 39 ) de grille sont sensiblement perpendiculaires à la première direction, sont ondulées et oscillent respectivement autour d'une ligne ( M ) médiane imaginaire, des deuxièmes barrettes ( 39 ) de grille voisines l'une de l'autre étant décalées, de manière à ce que les sommets ( 41 ) d'ondulation d'une deuxième barrette ( 39 ) de grille se trouvent là où les creux ( 34 ) d'ondulation se trouvent pour les deuxièmes barrettes ( 39 ) de grille voisines.

4. Procédé de pulvérisation suivant la revendication 1, 2 ou 3,
**caractérisé en ce que** le au moins un masque ( 15, 35 ) a des fentes comme ouvertures ( 17, 45 ) de masque.

5. Procédé de pulvérisation suivant l'une des revendications 1 à 4,
**caractérisé en ce que** l'on utilise un processus de pulvérisation thermique.

6. Procédé de pulvérisation suivant la revendication 5,
**caractérisé en ce que** le procédé de pulvérisation thermique est un procédé de pulvérisation par gaz froid.
